(19) **Europäisches Patentamt / European Patent Office / Office européen des brevets**

(11) **EP 2 664 199 B1**

(12) # EUROPEAN PATENT SPECIFICATION

(45) Date of publication and mention
of the grant of the patent:
**28.12.2022 Bulletin 2022/52**

(21) Application number: **12733857.2**

(22) Date of filing: **11.01.2012**

(51) International Patent Classification (IPC):
$H04W\ 72/00^{(2009.01)}$  $H04W\ 72/12^{(2009.01)}$
$H04W\ 74/08^{(2009.01)}$  $H04W\ 72/04^{(2009.01)}$
$H04W\ 52/34^{(2009.01)}$  $H04L\ 1/00^{(2006.01)}$
$H04L\ 5/00^{(2006.01)}$  $H04W\ 24/02^{(2009.01)}$
$H04W\ 52/14^{(2009.01)}$  $H04W\ 52/36^{(2009.01)}$
$H04W\ 52/38^{(2009.01)}$  $H04W\ 24/10^{(2009.01)}$

(52) Cooperative Patent Classification (CPC):
H04L 1/0026; H04L 5/001; H04L 5/0048;
H04L 5/0057; H04L 5/0073; H04L 5/0085;
H04L 5/0098; H04W 24/02; H04W 24/10;
H04W 52/346; H04W 52/365; H04W 52/367;
H04W 72/042; H04W 74/08; H04W 74/0833;

(Cont.)

(86) International application number:
**PCT/KR2012/000283**

(87) International publication number:
**WO 2012/096520 (19.07.2012 Gazette 2012/29)**

(54) **UPLINK TRANSMISSION POWER CONFIGURATION METHOD AND APPARATUS FOR MOBILE COMMUNICATION SYSTEM**

VERFAHREN UND VORRICHTUNG ZUR KONFIGURATION EINER AUFWÄRTSSTRECKENÜBERTRAGUNGSLEISTUNG FÜR EIN MOBILKOMMUNIKATIONSSYSTEM

PROCÉDÉ DE CONFIGURATION DE PUISSANCE DE TRANSMISSION DE LIAISON MONTANTE ET APPAREIL POUR SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2011 US 201161431635 P**
**27.09.2011 KR 20110097409**
**26.12.2011 KR 20110142069**

(43) Date of publication of application:
**20.11.2013 Bulletin 2013/47**

(73) Proprietor: **Samsung Electronics Co., Ltd.**
**Gyeonggi-do 443-742 (KR)**

(72) Inventors:
• **KIM, Soeng Hun**
**Yongin-si**
**Gyeonggi-do 446-908 (KR)**
• **VAN LIESHOUT, Gert-Jan**
**Staines Middlesex TW18 4QE (GB)**
• **CHO, Joon Young**
**Suwon-si**
**Gyeonggi-do 443-470 (KR)**
• **JEONG, Kyeong In**
**Suwon-si**
**Gyeonggi-do 443-372 (KR)**
• **NG, Boon Loong**
**Richardson, TX 75082 (US)**

(74) Representative: **Nederlandsch Octrooibureau**
**P.O. Box 29720**
**2502 LS The Hague (NL)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
WO-A2-2010/107907    KR-A- 20080 036 506
KR-A- 20090 077 647    KR-A- 20100 091 326
US-A1- 2010 197 339

- **CATT: "Definition of Pcmax in CA", 3GPP DRAFT; R4-104357, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Jacksonville; 20101115, 9 November 2010 (2010-11-09), XP050499529, [retrieved on 2010-11-09]**

(52) Cooperative Patent Classification (CPC): (Cont.)
H04L 1/0027; H04L 5/0032; H04W 52/146;
H04W 52/38; H04W 72/00; H04W 72/1247;
H04W 72/1284; Y02D 30/70

**Description**

[Technical Field]

The present invention relates to an uplink transmission power configuration method and apparatus of a mobile communication system. More particularly, the present invention relates to a method and apparatus for configuring uplink transmission power in a mobile communication system supporting downlink and uplink carrier aggregation.

[Background Art]

Mobile communication systems were originally developed to provide subscribers with voice communication services on the move. With the rapid advancement of various technologies, the mobile communication systems have evolved to support high speed data communication services as well as the voice communication services.

Recently, a next generation mobile communication system of the 3rd Generation Partnership Project (3GPP), referred to as a Long Term Evolution (LTE) system, is under development. The LTE system is a technology for realizing high-speed packet-based communication at about 100 Mbps. Recently, an LTE-Advanced (LTE-A) system is actively discussed as an evolution of the LTE system. The LTE-A system employs new techniques to increase the data rate. Hereinafter, both the legacy LTE system and LTE-A system are referred to as the LTE system. The LTE system employs carrier aggregation as one of the significant technologies to meet broader bandwidth requirements. The carrier aggregation is a technology for a User Equipment (UE) to transmit/receive data over multiple carriers. More specifically, the UE transmits/receives data in cells using carriers that are aggregated (for cells under the control of the same evolved Node B (eNB)). This means that the UE transmits/receives data in multiple cells.

In a mobile communication system of the related art, the single carrier uplink transmission power of a UE is calculated based on the scheduled resource amount, coding rate, and channel condition. The UE determines the final uplink transmission power by limiting the calculated transmission power to a predetermined maximum transmission power.

US 2010/0197339 A1 discloses about uplink power control for multiple component carriers. It discloses a first method which includes determining if a sum of the transmit powers of individual component carriers is less than a maximum user equipment transmit power, adjusting the transmit power of one or more of the component carriers if the sum of the transmit powers of the individual component carriers is not less than the maximum user equipment transmit power, and transmitting the component carriers to a network access node. It discloses further a second method which includes identifying a component carrier with minimum transmit power and a component carrier with a maximum transmit power, calculating a power difference, determining if the power difference is greater than a predetermined maximum power difference and if it is, increasing the transmit power of the component carrier with minimum transmit power by a first amount and decreasing the transmit power of the component carrier with the maximum transmit power by a second amount.

CATT: "Definition of Pcmax in CA", 3GPP DRAFT; R4-104357, 3RD GENERTAION PARTNERSHIP PROJECT (3GPP), vol. RAN WG4, no. Jacksonville; 20101115, 9 November 2010, discloses about calculating the maximum output transmit power, Pcmax, an all carriers based on $\Delta T_{C,c,}$ Maximum Power Reduction$_c$ (MPR$_c$) and Additive-MPR$_c$ (A-MPR$_c$).

[Disclosure of Invention]

[Technical Problem]

However, the uplink transmission power configuration technique of the related, which is designed for single carrier uplink transmission, is not appropriate for the multicarrier uplink transmission. Therefore, there is a need for a method for configuring uplink transmission power per uplink carrier in the system supporting uplink carrier aggregation that is capable maintaining a UE's required transmission power as much as possible while minimizing interference between frequency bands or cells.

[Solution to Problem]

Aspects of the present invention are to address at least the above-mentioned problems and/or disadvantages and to provide at least the advantages described below. Accordingly, an aspect of the present invention is to provide a method according to claim 1 and an apparatus according to claim 5.

[Advantageous Effects of Invention]

As described above, the uplink transmission power configuration method and apparatus of exemplary embodiments of the present invention is capable of determining the uplink transmission power efficiently while minimizing the inter-frequency band or inter-cell interference and maintaining the required transmission powers for aggregated uplink carriers as much as possible in the mobile communication system supporting carrier aggregation.

[Brief Description of Drawings]

The above and other aspects, features, and advantages of certain exemplary embodiments of the present invention will be more apparent from the following description taken in conjunction with the accompanying drawings, in which:

FIG. 1 is a diagram illustrating an architecture of a mobile communication system according to an exemplary embodiment of the present invention;
FIG. 2 is a diagram illustrating a protocol stack of a mobile communication system according to an exemplary embodiment of the present invention;
FIG. 3 is a diagram illustrating an exemplary situation of carrier aggregation in a mobile communication system according to an exemplary embodiment of the present invention;
FIG. 4 is a diagram illustrating a principle of determining uplink transmission power in multicarrier transmission of a User Equipment (UE) according to a first exemplary embodiment of the present invention;
FIG. 5 is a signaling diagram illustrating a method for determining uplink transmission power of a UE according to the first exemplary embodiment of the present invention;
FIG. 6 is a flowchart illustrating a method for determining uplink transmission power of a UE according to the first exemplary embodiment of the present invention;
FIG. 7 is a block diagram illustrating a configuration of a UE according to the first exemplary embodiment of the present invention;
FIG. 8 is a diagram illustrating a structure of a Power Headroom Report (PHR) for use in an uplink transmission power configuration method according to an exemplary embodiment of the present invention;
FIG. 9 is a diagram illustrating a structure of a PHR for use in an uplink transmission power configuration method according to a second exemplary embodiment of the present invention; and
FIG. 10 is a flowchart illustrating a method for transmitting a PHR according to the second exemplary embodiment of the present invention.

Throughout the drawings, it should be noted that like reference numbers are used to depict the same or similar elements, features, and structures.

[Mode for the Invention]

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to a method for configuring uplink transmission power per uplink carrier in a mobile communication system supporting carrier aggregation.

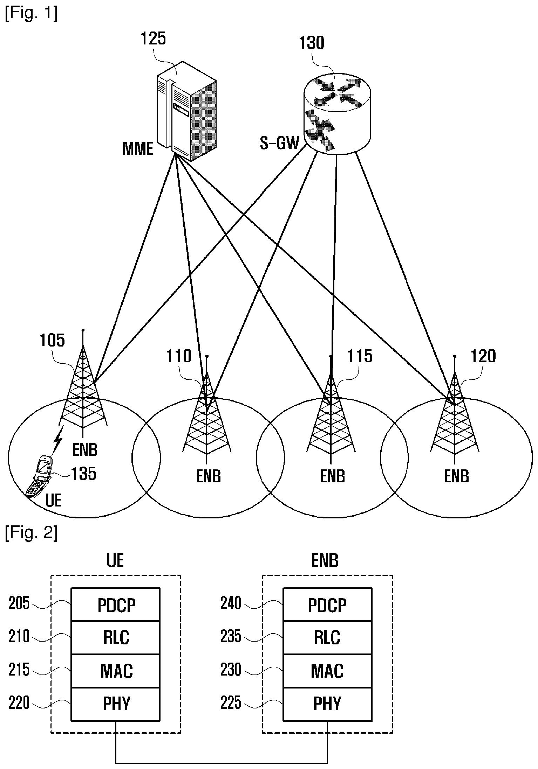

FIG. 1 is a diagram illustrating an architecture of a mobile communication system according to an exemplary embodiment of the present invention.

Referring to FIG. 1, the radio access network of the mobile communication system includes evolved Node Bs (eNBs) 105, 110, 115, and 120, a Mobility Management Entity (MME) 125, and a Serving-Gateway (S-GW) 130. User Equipment (UE) 135 connects to an external network via eNBs 105, 110, 115, and 120 and the S-GW 130. The eNBs 105, 110, 115, and 120 correspond to legacy node Bs of a Universal Mobile Communications System (UMTS). The eNBs 105, 110, 115, and 120 allow the UE 135 to establish a radio link and are responsible for complicated functions as compared to the legacy node B. In a Long Term Evolution (LTE) system, all the user traffic including real time services such as Voice over Internet Protocol (VoIP) are provided through a shared channel and thus there is a need for a device which is located in the eNB to schedule data based on the state information such as at least one of UE buffer conditions, power headroom state, channel state, etc. Typically, one eNB controls a plurality of cells. In order to secure the data rate of up to 100Mbps, the LTE system adopts Orthogonal Frequency Division Multiplexing (OFDM) as a radio access technology. Also, the LTE system adopts Adaptive Modulation and Coding (AMC) to determine the modulation scheme and channel coding rate in adaptation to the channel condition of the UE.

The S-GW 130 is an entity that provides data bearers so as to establish and release data bearers under the control of the MME 125. The MME 125 is responsible for various control functions and is connected to the eNBs 105, 110, 115, and 120.

FIG. 2 is a diagram illustrating a protocol stack of a mobile communication system according to an exemplary embodiment of the present invention.

Referring to FIG. 2, the protocol stack of the LTE system for use by a UE and an eNB includes a Packet Data Convergence Protocol (PDCP) layer 205 and 240, a Radio Link Control (RLC) layer 210 and 235, a Medium Access Control (MAC) layer 215 and 230, and a Physical (PHY) layer 220 and 225. The PDCP layer 205 and 240 is responsible for Internet Protocol (IP) header compression/decompression. The RLC layer 210 and 235 is responsible for segmenting the PDCP Protocol Data Unit (PDU) into segments of an appropriate size for an Automatic Repeat Request (ARQ) operation. The MAC layer 215 and 230 is responsible for establishing connection to a plurality of RLC entities so as to multiplex RLC PDUs into MAC PDUs and demultiplex the MAC PDUs into RLC PDUs. The PHY layer 220 and 225 performs channel coding on the MAC PDU and modulates the MAC PDU into OFDM symbols to transmit over a radio channel or performs demodulating and channel-decoding on received OFDM symbols and delivers the decoded data to a higher layer.

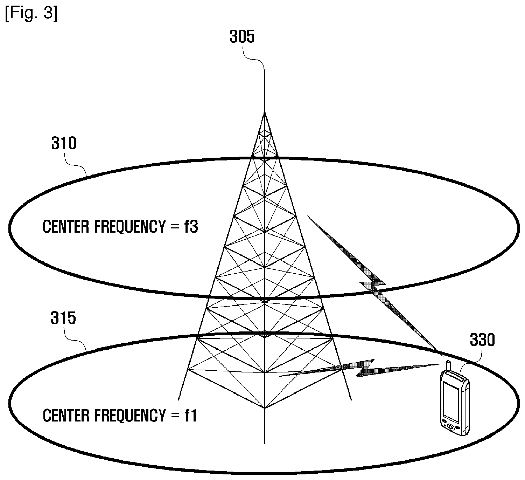

FIG. 3 is a diagram illustrating an exemplary situation of carrier aggregation in a mobile communication system according to an exemplary embodiment of the present invention.

Referring to FIG. 3, typically an eNB can use multiple carriers transmitted and received in different frequency bands. For example, the eNB 305 can be configured to use the carrier 315 with center frequency fl and the carrier 310 with center frequency f3. If carrier aggregation is not supported, the UE 330 transmits/receives data using one of the carriers 310 and 315. However, the UE 330 having the carrier aggregation capability can transmit/receive data using both of the carriers 310 and 315. The eNB can increase the amount of the resources to be allocated to the UE having the carrier aggregation capability in adaptation to the channel condition of the UE so as to improve the data rate of the UE.

In a case where a cell is configured with one downlink carrier and one uplink carrier as a concept of the related art, the carrier aggregation can be understood as if the UE communicates data via multiple cells. With the use of carrier aggregation, the maximum data rate increases in proportion to the number of aggregated carriers.

In the following description, the phrase "the UE receives data through a certain downlink carrier or transmits data through a certain uplink carrier" means to transmit or receive data through control and data channels provided in a cell corresponding to center frequencies and frequency bands of the downlink and uplink carriers. Although the description is directed to an LTE mobile communication system for explanation convenience, the present invention can be applied to other types of wireless communication systems supporting carrier aggregation. Exemplary embodiments of the present invention propose a method and apparatus for determining uplink carrier transmission power per carrier in uplink transmission of the UE.

In the mobile communication system, a UE calculates a required transmission power for single carrier uplink transmission. The uplink transmission power of the UE is determined by restricting the required transmission power below a predetermined maximum transmission power. The maximum transmission power is the UE-specific maximum transmission power determined depending on the power class of the UE and is determined in consideration of at least one of transmission power reduction (or transmission power backoff) for restricting a cell-specific maximum transmission power, spurious emission caused by the UE's uplink transmission below certain levels, a Specific Absorption Rate (SAR, for controlling influence of the electromagnetic wave to human body below predetermined levels), etc. The required transmission power is the transmission power calculated based on at least one of a given transmission resource, a Modulation and Coding Scheme (MCS) level, a path loss, etc., available for the scheduled uplink transmission. For example, if uplink transmission is scheduled for a UE at a certain time point, the UE calculates required transmission power based on at least one of the given transmission resource, the MCS level, the path loss, etc.

A first exemplary embodiment of the present invention proposes a method and apparatus for configuring uplink transmission power of a UE based on a SAR.

<First exemplary embodiment>

A description is made of the method for determining uplink transmission power in case where multiple serving cells perform uplink transmission in consideration of SAR requirements while maintaining compatibility with an uplink transmission power determination process of the related art that is designed for single serving cell environment. In a case of multicarrier uplink transmission, i.e., if a multicarrier uplink scheduling command for performing uplink transmission in one or more cells (hereinafter, receiving uplink scheduling for a certain cell means being allocated uplink transmission resources and MCS level in the cell), the UE calculates the required transmission power per uplink using the same method as the calculation method of the related art. The UE restricts the required transmission power below a predetermined maximum allowed transmission power.

In the first exemplary embodiment of the present invention, the maximum allowed transmission power per serving cell is referred to as a type 1 maximum transmission power. The UE compares the sum of the values restricted to the type 1 maximum transmission power with another maximum allowed transmission power. Here, the other maximum allowed transmission power is applied to all of the UEs and is referred to as type 2 maximum transmission power. If the sum of the required transmission powers restricted to the type 1 maximum transmission power is greater than the type 2 maximum transmission power, the UE reduces the uplink transmission powers to be equal to the type 2 maximum transmission power according to a predetermined method. For this purpose, the UE determines the type 1 maximum transmission power and type 2 maximum transmission power as follows.

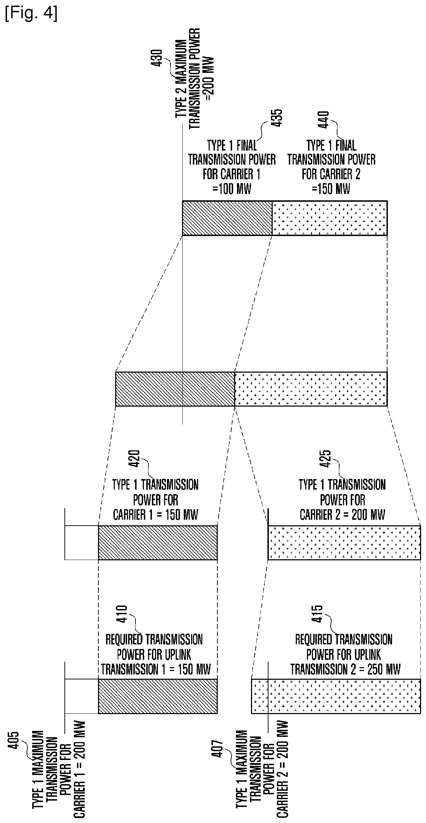

The UE determines parameters such as a Maximum Power Reduction (MPR) and Additive-Maximum Power Reduction (A-MPR) that can be commonly applied to every cell. The UE applies the same MPR and A-MPR to the cells in which uplink transmissions are scheduled. In order to configure the type 2 maximum transmission power, the UE determines the A-MPR (or P-MPR) as a separate transmission power reduction parameter for fulfilling a SAR and applies the determined value. Also, in order to configure the type 2 maximum transmission power, the UE uses a value derived from maximum allowed UE transmission powers ($P_{EMAX}$) and nominal UE power ($P_{PowerClass}$) in the serving cells in which uplink transmissions are scheduled. FIG. 4 is a diagram illustrating a principle of determining uplink transmission power in multicarrier transmission of a UE according to a first exemplary embodiment of the present invention.

If an uplink scheduling command for uplink transmissions in serving cells 1 and 2 is received, the UE determines its uplink transmission power. In the following description, the terms "carrier" and "cell" are used interchangeably. The term "serving cell" denotes the cell in which downlink and uplink transmissions or downlink transmission are (is) scheduled for the UE configured with carrier aggregation.

The UE determines the type 1 maximum transmission powers for the serving cells 1 and 2. FIG. 4 is depicted under the assumption that the type 1 maximum transmission power 405 of the serving cell 1 (i.e., carrier 1) and the type 1 maximum transmission power 407 of the serving cell 2 (i.e., carrier 2) are 200 mW. Here, the type 1 maximum transmission powers 405 and 407 can be different from each other. How to determine the type 1 maximum transmission powers 405 and 407 of the respective serving cells are described further below in more detail. In a case where the frequency bands of the serving cells 1 and 2 are identical with each other, the same MPR and A-MPR are used to determine the type 1 maximum transmission power.

For this purpose, the UE calculates the required transmission power of each serving cell. In this exemplary embodiment, it is assumed that the required transmission powers 410 and 415 of serving cells 1 and 2 are 150 mW and 250 mW, respectively. Since the required transmission powers 410 and 415 are calculated using the same method as the required transmission power determination method, a detailed description thereof is omitted.

The UE compares the required transmission powers 410 and 415 with the type 1 maximum transmission powers 405 and 407 of the respective serving cells. If the required transmission powers 410 and 415 are greater than the type 1 maximum transmission powers 405 and 407 respectively, the UE sets the uplink transmission powers 420 and 425 to type 1 maximum transmission powers 405 and 407. Otherwise, if the required transmission powers 410 and 415 are equal to or less than the type 1 maximum transmission powers 405 and 407 respectively, the UE sets the uplink transmission power 420 and 425 to the required transmission power 410 and 415. In the following description, the required transmission power per serving cell which is restricted to the corresponding type 1 maximum transmission power (i.e., the minimum value between the required transmission power and type 1 maximum transmission power) is referred to as the type 1 transmission power of the serving cell.

In the exemplary case of FIG. 4, the required transmission power 410 of 150 mW is less than the type 1 maximum transmission power 405 of 200 mW in the serving cell 1. Accordingly, the UE sets the type 1 uplink transmission power 420 of the serving cell 1 to the required transmission power 410 of 150 mW.

Meanwhile, the required transmission power 415 of 250 mW is greater than the type 1 maximum transmission power 407 of 200 mW. Accordingly, the UE sets the type 1 uplink transmission power 425 of the serving cell 2 to the type 1 maximum transmission power 407 of 200 mW.

Afterward, the UE determines whether the sum of the type 1 uplink transmission powers 420 and 425 of the respective serving cells is greater than the type 2 maximum transmission power 430. The type 2 maximum transmission power 430 is configured per UE. The type 2 maximum transmission power is determined in consideration of at least one of P-MPR, $P_{PowerClass}$, and $P_{EMAX}$ of the serving cells. If the sum of the type 1 uplink transmission powers 420 and 425 is equal to or less than the type 2 maximum transmission power 430, the UE sets the uplink transmission powers 435 and 440 as the type 1 uplink transmission powers 420 and 425 of the respective serving cells. Otherwise, if the sum of the type 1 uplink transmission powers 420 and 425 is greater than the type 2 maximum transmission power 430, the UE reduces the sum of the type 1 uplink transmission powers 420 and 425 so as to match the type 2 maximum transmission power 430 according to a predetermined method. In the exemplary case of FIG. 4, if the type 2 maximum transmission power 430 is 250 mW, the sum of the type 1 uplink transmission powers (350 mW) should be reduced by as much as 100 mW. The UE restricts the sum of the type 1 uplink transmission powers 420 and 425 to 250 mW using a predetermined method, e.g., reducing the same amount of power. In the exemplary case of FIG. 4, the final uplink transmission power of the carrier 1 becomes 100 mW while the final uplink transmission power of the carrier 2 becomes 150 mW. A description is made below of the method for determining the type 1 maximum transmission power and the type 2 maximum transmission power.

<Type 1 maximum transmission power determination method>

The type 1 maximum transmission power of a serving cell c (PCMAX,c) is determined according to Math Figure 1. In Math Figure 1, the upper limit of the type 1 maximum transmission power (PCMAX_H,c) is determined according to Math Figure 2. The lower limit of type 1 maximum transmission power (PCMAX_ L,c) is determined according to Math Figure 3.

【Math Figure 1】

$$P_{CMAX\_L,c} \leq P_{CMAX,c} \leq P_{CMAX\_H,c}$$

【Math Figure 2】

$$P_{CMAX\_H,c} = MIN\ \{P_{EMAX,c},\ P_{PowerClass}\}$$

【Math Figure 3】

$$P_{CMAX\_L,c} = MIN\ \{\ P_{EMAX,c} - \Delta T_{C,c},\ P_{CMAX\_H,c} - MPR_c - A\text{-}MPR_c - \Delta T_{C,c}\ \}$$

where $P_{EMAX,c}$, $P_{PowerClass}$, $\Delta T_{C,c}$, $MPR_c$, and A-$MPR_c$ are as follows.

$P_{EMAX,c}$ denotes a maximum allowed UE transmission power in the serving cell c which an eNB notifies the UE of. $P_{PowerClass}$ denotes a nominal UE power determined depending on the physical characteristics of the UE. The power class of a UE is determined at the manufacturing state, and the UE reports its power class to the network using a predetermined Radio Resource Control (RRC) message.

$\Delta T_{C,c}$, $MPR_c$, and A-$MPR_c$ are parameters defining a limitation value for calculating maximum transmission power in the serving cell c in order to restrict unintended emission or interference to an adjacent channel to within a certain requirement. In more detail, $\Delta T_{C,c}$ is the value for allowing additional transmission power adjustment in a case where uplink transmission is performed on the edges of a frequency band. For example, if the uplink transmission is performed in a bandwidth corresponding to the lowest or highest 4 MHz of a certain frequency band, the UE sets $\Delta T_{C,c}$ to 1.5 dB and the rest to 0.

$MPR_c$ is the value which is determined based on the amount (i.e., bandwidth) and modulation scheme of the transmission resources allocated to the UE. A-$MPR_c$ is the value which is determined based on the frequency band with uplink transmission, local characteristics, and uplink transmission bandwidth. The A-$MPR_c$ is used for preparing frequency bandwidth particularly sensitive to spurious emission according to local characteristics and frequency band characteristics.

In a case where multiple serving cells are involved in uplink transmission, the aforementioned parameters can be determined per cell. If the cells involved in the uplink transmission are operating on the same frequency band (the frequency band of a certain cell means the entire frequency resource used for data transmission/reception in the cell) and adjacent to each other (e.g., uplink frequency band of cell 1 is x ~ x + y MHz and uplink frequency band of cell 2 is x+y ~ x+y+z MHz), the same $\Delta T_{C,c}$ MPR$_c$, and A-MPR$_c$ are commonly applied to the serving cells. In this case, these parameters are determined at a time even though multiple cells are involved in the uplink transmission.

$\Delta T_{C,c}$, MPR$_c$, and A-MPR$_c$ are closely associated with the frequency or frequency band of the cell involved in uplink transmission (e.g., whether the uplink transmission is performed at the edge of a given frequency bandwidth), or size and position of the frequency resources for uplink transmission. If n cells are operating on contiguous frequency bands in the same frequency bandwidth, it can be interpreted that n cells are equal to a cell having n-fold frequency band. Accordingly, when the uplink transmission is performed in the cells allocated adjacent frequency bands, it can be modeled that the uplink transmission is performed on the frequency band of one cell which corresponds to the frequency bands allocated the multiple cells. That is, if the cell 1 (frequency band = x ~ x + y MHz) and the cell 2 (frequency band = x+y ~ x+y+z MHz) are involved in the uplink transmission, the UE determines $\Delta T_{C,c}$, MPR$_c$, and A-MPR$_c$ under the assumption of a virtual cell (frequency band = x ~ x + y + z MHz). Afterward, the UE determines the type 1 maximum transmission powers of the cells 1 and 2 using $\Delta T_{C,c}$, MPR$_c$, and A-MPR$_c$.

<Type 2 maximum transmission power determination method>

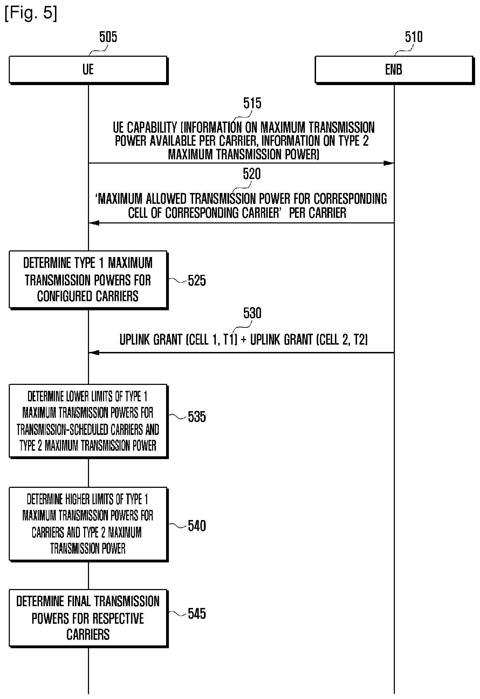

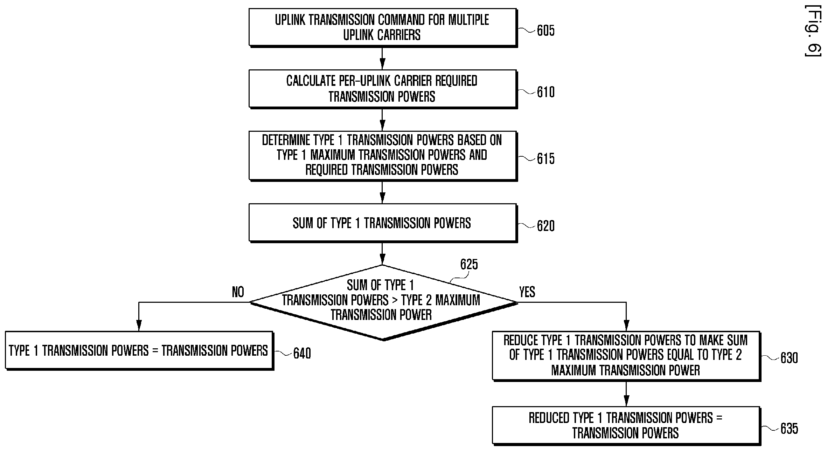

The type 2 maximum transmission power P$_{CMAX2}$ of the UE for uplink transmission in multiple cells is determined according to Math Figure 4. In Math Figure 4, the upper limit of type 2 maximum transmission power P$_{CMAX2\_H}$ is determined according to Math Figure 5. The lower limit of type 2 maximum transmission power P$_{CMAX2\_L}$ is determined according to Math Figure 6.

【Math Figure 4】

$$P_{CMAX2\_L} \leq P_{CMAX2} \leq P_{CMAX2\_H}$$

【Math Figure 5】

$$P_{CMAX2\_H} = MIN \ \{P_{EMAX2}, P_{PowerClass}\}$$

【Math Figure 6】

$$P_{CMAX2\_L} = MIN \ \{ P_{CMAX2\_H} - P\text{-}MPR, \text{Highest } P_{CMAX\_L,c} \}$$

P$_{EMAX}$ is the parameter denoting maximum allowed UE transmission power signaled per cell. Since P$_{EMAX2}$ is of the simultaneous uplink transmissions of multiple cells, it is not clear which P$_{EMAX,c}$ should be used as P$_{EMAX2}$. Accordingly, P$_{EMAX,c}$ is set to the value selected in consideration of P$_{EMAX,c}$ of the cells involved in the uplink transmission. For example, the highest one among the P$_{EMAX,c}$ of the cells involved in the uplink transmission can be selected as P$_{EMAX2}$. Of course another method can be used for determining P$_{EMAX,c}$. Here, P$_{EMAX2\_H}$ can be defined as the value derived from the P$_{PowerClass}$ and P$_{EMAX,c}$'s of all of the cells involved in the uplink transmission. For example, the highest one among the P$_{EMAX,c}$'s of all of the cells can be selected as P$_{EMAX2\_H}$.

P-MPR is the transmission power reduction value applied for fulfilling a SAR requirement and is determined in consideration of the distance between the device and the human body. If the distance between the device and the human body becomes close, then P-MPR is set to a relatively high value since the total transmission power should be decreased. In contrast, if the distance between the device and the human body become far, P-MPR is set to a relatively low value since the total transmission power should be increased.

P-MPR is the parameter for controlling a total amount of electromagnetic energy being radiated from a device. Accordingly, it is preferred to use P-MPR as the parameter for adjusting P$_{CMAX2}$ restricting the entire uplink transmission power of the device rather than as the parameter for adjusting P$_{CMAX,c}$ for restricting the per-cell transmission power of the device. If P$_{CMAX,c}$ is adjusted with P-MPR, it may incur a side effect from using an unnecessarily high P-MPR.

Assuming P$_{CMAX,c}$ of 100 mW for cell 1 and P$_{CMAX,c}$ of 200 mW for cell 2 without consideration of P-MPR, P$_{CMAX2}$ of 200 mW for uplink transmission of UE in the cells 1 and 2, and final transmission power of 150 mW for satisfying the SAR, the P-MPR should be set to 50 mW for cell 1 and 100 mW for cell 2 in order to match the final transmission power of 150 mW by applying the P-MPR to $P_{CMAX,c}$. However, the final transmission power obtained using these values may not have an inappropriate value. That is, if the required transmission powers for both the cells 1 and 2 are 100 mW, the final transmission powers for the cells 1 and 2 that are obtained by applying the P-MPR separately become 50 mW and 100 mW respectively. This means that the transmission power reduction occurs only for the cell 1. In contrast, if the P-MPR is applied to $P_{CMAX2}$, the sum of the type 1 transmission power of 100 mW for cell 1 and the type 1 transmission power of 100 mW for cell 2 is limited to $P_{CMAX2}$ adjusted by P-MPR, i.e., 150 mW. Accordingly, the transmission power reduction is applied for the cells 1 and 2, resulting in final transmission power of 75 mW for both the cells 1 and 2. This means that it is preferred to apply P-MPR to $P_{CMAX2}$ for configuring transmission power of the UE.

As described above, the UE determines $P_{CMAX2}$ by applying at least one of $P_{EMAX}$'s for the cells involved in uplink transmission, PPowerClass, P-MPR, $\Delta T_{C,c}$, $MPR_c$, and $A\text{-}MPR_c$.

FIG. 5 is a signaling diagram illustrating a method for determining uplink transmission power of a UE according to the first exemplary embodiment of the present invention. The mobile communication system depicted in FIG. 5 includes a UE 505 supporting multicarrier uplink transmission and an eNB 510 supporting carrier aggregation.

Referring to FIG. 5, the UE 505 sends the eNB 510 a message such as UE capability report message carrying the information on type 1 maximum transmission power and type 2 maximum transmission power in step 515. The information on the type 2 maximum transmission power is the information provided for the eNB 510 to check the type 2 maximum transmission power of the UE 505. The information on the type 2 maximum transmission power can be the information directly indicating the type 2 maximum transmission power or the information on the Power Class of the UE 505. The eNB 510 sends the UE 505 information on the maxim allowed transmission power $P_{EMAX,c}$ per serving cell, i.e., carrier, in step 520. $P_{EMAX,c}$ is the parameter indicating the maximum allowed UE output power for cell c in consideration of inter-cell interference. $P_{EMAX,c}$ can be transmitted to the UE 505 in system information or in a predetermined control message for the redundant serving cells configured for the UE 505. In more detail, when the UE has only one serving cell before aggregating carriers, the $P_{EMAX,c}$ for the corresponding cell can be acquired in the system information of the corresponding cell. However, $P_{EMAX,c}$ for the serving cells of which carriers are newly aggregated can be informed through a peer to peer control message, i.e., a RRC CONNECTION RECONFIGURATION message, transmitted from the eNB to the UE. The UE 505 determines the type 1 maximum transmission power per carrier using $P_{EMAX,c}$ and $P_{PowerClass}$ provided by the eNB 510 in step 525. The upper limit of the type 1 maximum transmission power is determined according to Math Figure 2. Afterward, the UE receives an uplink scheduling command instructing uplink transmission in multiple serving cells from the eNB 510 in step 530. For example, the UE 515 receives the uplink grant (CELL 1, t1) instructing the uplink transmission in cell 1 of carrier 1 at time t1 and the uplink grant (CELL 1, t2) instructing the uplink transmission in cell 2 of carrier 2 at time t2.

The UE 505 determines the lower limits of the type 1 maximum transmission powers for the carriers on which transmission is scheduled and type 2 maximum transmission power in step 535. In more detail, if the frequency bands of the cells involved in the uplink transmission are adjacent with each other in a given frequency bandwidth, the UE determines a set of $\Delta T_{C,c}$, $MPR_c$, and $A\text{-}MPR_c$ in consideration of the conditions of the two cells. Next, the UE determines the lower limit of the type 1 maximum transmission power for the serving cells using Math Figure 3. The UE 505 also determines the type 2 maximum transmission power according to Math Figure 4 to 6. Next, the UE 505 determines the type 1 maximum transmission powers for carriers and type 2 maximum transmission power in step 540. Finally, the UE determines the final transmission power per carrier in step 545. In more detail, the UE 505 determines the uplink transmission power per serving cell using the selected type 1 maximum transmission power and type 2 maximum transmission power. The UE 505 calculates the required transmission power per serving cell. Next, the UE 505 limits the required transmission power to the type 1 maximum transmission power for the corresponding serving cell so as to determine the type 1 uplink transmission power per serving cell. The UE 505 calculates the sum of the per-cell type 1 uplink transmission powers and compares the sum of the per-cell type 1 uplink transmission powers with the type 2 maximum transmission power. If the sum of the per-cell type 1 uplink transmission powers is equal to or less than the type 2 maximum transmission power, the UE determines the per-cell type 1 uplink transmission powers as the uplink transmission powers of the serving cells. If a sum of the per-cell type 1 uplink transmission powers is greater than the type 2 maximum transmission power, the UE performs transmission power reduction on the per-cell type 1 uplink transmission powers to limit the sum of the per-cell type 1 uplink transmission powers to the type 2 maximum transmission power.

FIG. 6 is a flowchart illustrating a method for determining uplink transmission power of a UE according to the first exemplary embodiment of the present invention. Referring to FIG. 6, the UE receives a command for multicarrier uplink transmission in step 605. Upon receipt of the multicarrier uplink transmission command, the UE determines uplink transmission power in step 610.

At step 610, the UE calculates required transmission power per uplink carrier. Next, the UE determines type 1 transmission powers based on per-carrier type 1 maximum transmission powers and per-carrier required transmission powers in step 615. That is, the UE determines the minimum value between the type 1 maximum transmission power and the required transmission power for the corresponding carrier as the type 1 uplink transmission power for the corresponding carrier. Here, the UE can apply the same $\Delta T_{C,c}$, $MPR_c$, and A-$MPR_c$ to determine the type 1 maximum transmission powers for respective serving cells.

The UE adds up the type 1 uplink transmission powers in step 620. Next, the UE determines whether the sum of the type 1 uplink transmission powers is greater than the type 2 maximum transmission power in step 625. Here, the type 2 maximum transmission power is determined based on the following parameters:

- $P_{EMAX}$'s for cells involved in uplink transmission;
- $P_{PowerClass}$ of UE;
- P-MPR at corresponding time point; and
- $\Delta T_{C,c}$, $MPR_c$, and A-$MPR_c$ used for determining type 1 maximum transmission powers. If the sum of the type 1 uplink transmission powers is greater than the type 2 maximum transmission power at step 625, the UE reduces the type 1 uplink transmission powers such that the sum of the type 1 uplink transmission powers is equal to the type 2 maximum transmission power in step 630. For example, the UE divides a difference between the sum of the type 1 uplink transmission powers and the type 2 maximum transmission power by a number of type 1 uplink transmission powers and subtracts the resulting value from the respective type 1 uplink transmission powers. Next, the UE determines the reduced type 1 uplink transmission powers as the final uplink transmission powers for the respective carriers in step 635.

If the sum of the type 1 uplink transmission powers is equal to or less than the type 2 maximum transmission power at step 625, the UE determines the type 1 uplink transmission powers as the final uplink transmission powers for the respective carriers in step 640.

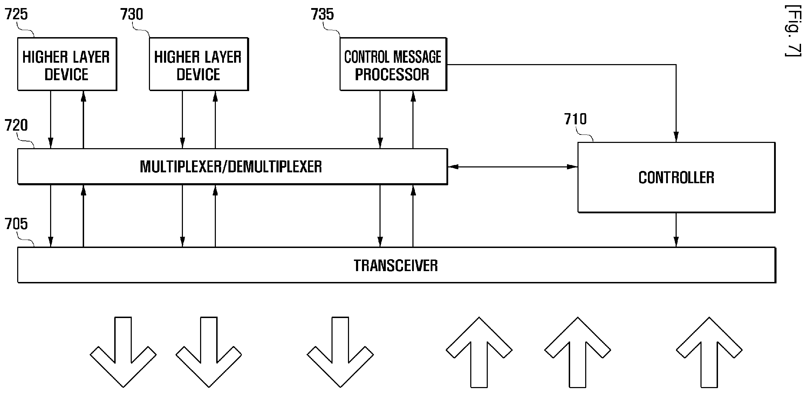

FIG. 7 is a block diagram illustrating a configuration of a UE according to the first exemplary embodiment of the present invention.

Referring to FIG. 7, the UE according to an exemplary embodiment of the present invention includes a transceiver 705, a controller 710, a multiplexer/demultiplexer 720, higher layer devices 725 and 730, and a control message processor 735.

The transceiver 705 receives data and control signals on downlink channels of the serving cell and transmits data and control signals on uplink channels of the serving cell. In a case where multiple serving cells are configured, the transceiver 705 performs data and control signal transmission/reception in the multiple serving cells.

The controller 710 checks scheduling commands, e.g., uplink grants, received by the transceiver 705 and controls the transceiver 705 and the multiplexer/demultiplexer 720 to perform uplink transmission with an appropriate transmission resource at an appropriate time. That is, the controller 710 determines type 1 maximum transmission power per carrier for uplink transmission according to Math Figure 1 to 3.

The controller 710 also determines the type 2 maximum transmission power according to Math Figure 4 to 6. Next, the controller 710 determines the type 1 uplink transmission power by comparing the required transmission power with the determined type 1 maximum transmission power per cell as shown in step 615 of FIG. 6. The controller 710 also determines the final uplink transmission power per serving cell by comparing the sum of the type 1 uplink transmission powers for individual serving cells with the determined type 2 maximum transmission power. The controller 710 also controls the transceiver 705 to perform uplink transmission with the final uplink transmission power determined per carrier.

The multiplexer/demultiplexer 720 can multiplex the data generated by the higher layer devices 725 and/or control message processor 735. The multiplexer/demultiplexer 720 also can demultiplex the received data to be transferred to the higher layer devices 725 and 730 and/or the control message processing unit 735.

Each of the higher layer devices 725 and 730 is configured per service. The higher layer devices 725 and 730 process the data generated by a user service such as File Transfer Protocol (FTP) or VoIP and deliver the process result to the multiplexer/demultiplexer 720 or process the data from the multiplexer/demultiplexer 720 and delivers the process result to the service applications of a higher layer.

The control message processor 735 processes the control message received from the eNB and takes an appropriate action. That is, the control message processor 735 extracts the uplink transmission power configuration information per serving cell, e.g., $P_{EMAX,c}$ per serving cell, from the control message and delivers the extracted information to the controller 710.

<Second exemplary embodiment>

The displacement of $P_{CMAX2}$ is important information referenced by the eNB for uplink scheduling. The second exemplary embodiment of the present invention proposes a method for reporting the displacement of $P_{CMAX2}$ when the displacement of $P_{CMAX2}$ of the UE becomes greater than a predetermined value.

The second exemplary embodiment of the present invention may use the Power Headroom Report (PHR) MAC Control Element (CE) of the related art rather than introducing a new control message for reporting $P_{CMAX2}$.

The PHR MAC CE is the control message for the UE to notify the eNB of the Power Headroom (PH) of the UE. Here, PH is the difference between $P_{CMAX}$ and required transmission power. One PHR includes PHs of multiple serving cells. PHR is triggered when a predetermined condition is fulfilled and multiplexed in a MAC PDU in the first uplink transmission.

In the present exemplary embodiment, the PHR trigger condition includes the condition where the displacement of $P_{CMAX2}$ becomes equal to or greater than a predetermined value.

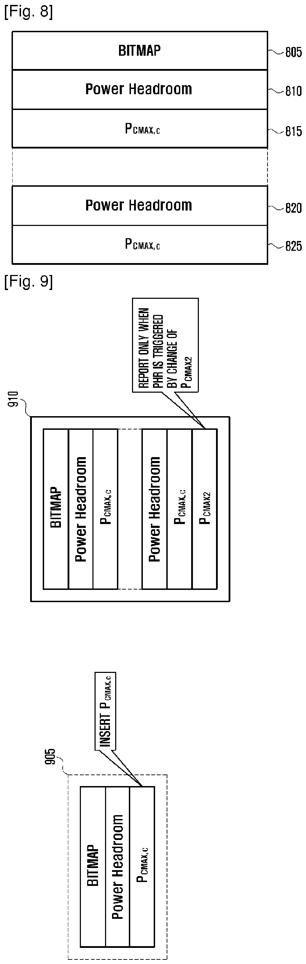

FIG. 8 is a diagram illustrating a structure of a PHR for use in an uplink transmission power configuration method according to an exemplary embodiment of the present invention.

Referring to FIG. 8, PHR is composed of a 1-byte bitmap 805 and a plurality of PHs 810 and 820 paired with $P_{CMAX,c}$ 815 and 825. The bitmap 805 indicates the serving cells for which PH is included. The PHR includes PHs for the serving cells activated at the time when the PHR is triggered, and $P_{CMAX,c}$ is included selectively. If there is only one serving cell in an active state or no redundant uplink carrier is configured, the PHR is formed as a combination of a bitmap and a $PH/P_{CMAX,c}$.

In a case where there is only one serving cell in active state, $P_{CMAX2}$ is reported in the $P_{CMAX,c}$ field of the related art. In a case where there is more than one active cell, a new field is introduced to report $P_{CMAX2}$. That is, $P_{CMAX2}$ is reported in the $P_{CMAX,c}$ field when there is only one active cell since $P_{CMAX,c}$ and $P_{CMAX2}$ are equal to each other and in a separate field when there is more than one active cell since the $P_{CMAX,c}$ and $P_{CMAX2}$ are different from each other.

In a case where there is more than one active cell, the eNB notifies the UE of the existence of the $P_{CMAX2}$ field using a predetermined bit of the bitmap. The predetermined bit can be the last bit of the bitmap.

FIG. 9 is a diagram illustrating a structure of PHR for use in an uplink transmission power configuration method according to a second exemplary embodiment of the present invention.

FIG. 9 shows a PHR format 905 for use in the case where only one active cell exists and another PHR format 910 for used in the case where more than one active cell exists.

That is, the first PHR format 905 includes a $P_{CMAX2}$ field containing $P_{CMAX2}$ for the active cell. The second PHR format 910 is used when PHR is triggered according to the change of $P_{CMAX2}$.

In a PHR function configuration state, the eNB can configure a $P_{CMAX2}$ report in order for the UE to report $P_{CMAX2}$ or not. That is, the eNB sends the UE a one-bit information indicating whether $P_{CMAX2}$ is to be reported. If the $P_{CMAX2}$ report is configured positively, the UE sends a PHR containing $P_{CMAX2}$.

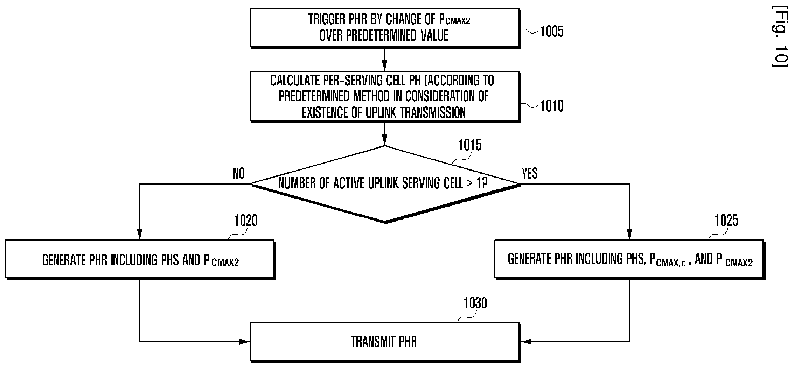

FIG. 10 is a flowchart illustrating a method for transmitting a PHR according to the second exemplary embodiment of the present invention.

Referring to FIG. 10, the displacement of $P_{CMAX2}$ becomes greater than a predetermined value so as to trigger PHR in step 1005\. PHR is triggered when the path loss of a reference cell (i.e., path loss reference cell) changes more than a predetermined amount among the active cells or a predetermined time duration elapses after transmission of the PHR. If the path loss in a certain serving cell A is referenced for another serving cell B, this means that the pass loss of the serving cell A is referenced for determining the uplink transmission power in the serving cell B. Accordingly, when the serving cells A and B are identical with each other, the uplink transmission power can be determined using the path loss of the downlink channel of each cell. When the serving cells A and B are different from each other, the uplink transmission power can be determined using the path loss on respective downlink channels. In this case, the eNB informs the UE of the path loss reference cell through RRC signaling. The UE calculates $P_{CMAX2}$ using Math Figure 4, 5, and 6 and, if the $P_{CMAX2}$ has changed by more than a predetermined amount as compared to the most recently received value, the PHR is triggered.

The UE calculates PH per serving cell according to a predetermined method in consideration of the existence of uplink transmission in step 1010. That is, the UE calculates PHs of the cells currently in an active state. At this time, the UE calculates PH in a different manner according to whether a certain serving cell has real uplink transmission. The UE uses <PH calculation method 1> for the serving cell having real uplink transmission and <PH calculation method 2> for the serving cell having no real uplink transmission. <PH calculation method 1> is defined as follows.

<PH calculation method 1>

$$PH = \text{Real } P_{CMAX,c} - \text{Real PUSCH power}$$

The real $P_{CMAX,c}$ is the maximum transmission power of the serving cell c which is determined by Math Figure 1, 2, and 3 in a situation where a real MAC PDU is transmitted. Math Figure 3 can be modified to Math Figure 7 in consideration of P-MPR$_c$.

【Math Figure 7】

$$P_{CMAX\_L,c} = \text{MIN} \{P_{EMAX,c} - \text{P-MPR}_c - T_{C,c}, P_{CMAX\_H,c} - \text{MPR}_c - \text{A-MPR}_c - T_{C,c} \}$$

The real PUSCH power is the transmission power required for transmitting MAC PDU while guaranteeing a predetermined transmission quality. The PUSCH power of an $i^{th}$ subframe in the serving cell c is calculated using Math Figure 8 with the number of resource block $M_{PUSCH,c}$ (i), power offset induced from MCS $\Delta_{TF,c}$, path loss $PL_c$, and TPC command accumulation value $f_c(i)$.

【Math Figure 8】

$$PUSCH\ power\ (i) = \left\{10 \log_{10}(M_{PUSCH,c}(i)) + P_{O\_PUSCH,c}(j) + \alpha_c(j) \cdot PL_c + \Delta_{TF,c}(i) + f_c(i) \right\}$$

In Math Figure 8, $PL_c$ denotes the path loss in the cell configured to provide the service cell c with the path loss. That is, the path loss used for determining uplink transmission power in a certain serving cell is the path loss of the downlink channel of the corresponding cell or the path loss of the downlink channel of a different cell. The path loss to be used is notified by the eNB to the UE in the call setup process.

In Math Figure 8, $f_c(i)$ denotes the accumulation value of Transmission Power Control (TPC) in serving cell c. $P_{O\_PUCCH,c}$ denotes a higher layer parameter composed of cell-specific and UE-specific values. $\alpha_c$ denotes the weight applied to the path loss when the uplink transmission power is calculated using the 3-bit cell-specific value provided from higher layers. As $\alpha_c$ increases, the influence of the path loss to the uplink transmission power increases.

<PH calculation method 2>

$$PH = \text{Reference } P_{CMAX,c} - \text{Reference PUSCH power}$$

The Reference $P_{CMAX,c}$ denotes the maximum transmission power in the cell having no real uplink transmission. Since no real uplink transmission occurs, the maximum transmission power has no real meaning but is used to calculate PH. The Reference $P_{CMAX,c}$ is the value obtained using Math Figure 1, 2, and 7 when P-MPR$_c$, Tc,c, and A-MPR$_c$ are all set to 0. The reason why the parameters are set to 0 is to notify the eNB of the value of Reference $P_{CMAX,c}$ without a separate report for $P_{CMAX,c}$. In other words, if one of the parameters is set to a non-zero value, the eNB cannot be aware of the $P_{CMAX,c}$ used in the PH calculation such that it is necessary to report $P_{CMAX,c}$ separately. However, it is difficult to acquire an accurate $P_{CMAX,c}$ from PH for the serving cell having no real uplink transmission. Accordingly, the parameters for the serving cell having no real uplink transmission are set to 0 in order to negate the report of inaccurate information, resulting in removal of inefficiency.

The Reference PUSCH power is calculated by applying Math Figure 8 under the assumption of scheduling of 1 transmission resource block with the lowest MCS. That is, $M_{PUSCH,c}(i)$ as Reference PUSCH power is set to 1, and $\Delta_{TF,c}$ is set to the lowest value of 0 as shown in Math Figure 9.

【Math Figure 9】

$$PUSCH\ power\ (i) = \left\{ P_{O\_PUSCH,c}(j) + \alpha_c(j) \cdot PL_c + f_c(i) \right\}$$

The UE calculates PHs of the serving cells currently in an active state using <PH calculation method 1> and <PH calculation method 2>, and the procedure proceeds to step 1015.

The UE determines whether a number of currently active uplink serving cells is greater than 1 in step 1015. The uplink serving cell means the serving cell configured for uplink transmission. If the number of currently active uplink serving cells is 1, the procedure goes to step 1020 and, otherwise, if the number of currently active uplink serving cells is greater than 1, goes to step 1025.

At step 1020, the UE generates PHR in the format as denoted by reference number 905 of FIG. 9. The PHR includes PHs of the serving cells in an active state, and the $P_{CMAX,c}$ field contains $P_{CMAX2}$. Since the $P_{CMAX2}$ and the $P_{CMAX,c}$ are identical with each other when only one active uplink serving cell exists, it is not necessary for the UE to report the $P_{CMAX2}$ separately. Accordingly, when there is only one active uplink serving cell, the UE does not report $P_{CMAX2}$.

At step 1025, the UE generates PHR in the format as denoted by reference number 910 of FIG. 9. That is, the UE configures the first byte of the PHR to indicate the PHs included in the corresponding PHR. The last bit of the first byte is used for indicating whether $P_{CMAX2}$ filed exists. If PHR is triggered due to the change of $P_{CMAX2}$, the UE inserts $P_{CMAX2}$ in PHR and sets the last bit of the first byte to 1. Next, the UE inserts the PHs of the uplink serving cells in an active state. In a case where PH is calculated using the PH calculation method 1 (i.e., using real $P_{CMAX,c}$ and real PUSCH power, or if there is real uplink transmission in the corresponding serving cell), the UE reports $P_{CMAX,c}$ too. Otherwise, if PH is calculated using the PH calculation method 2 (i.e., using reference $P_{CMAX,c}$ and reference PUSCH power, or if there is no real uplink transmission in the corresponding serving cell), the UE does not report $P_{CMAX,c}$.

The UE inserts $P_{CMAX2}$ in the last byte. The UE can insert the value obtained by subtracting the sum of the uplink transmission powers for use in the active uplink serving cells from $P_{CMAX2}$ rather than $P_{CMAX2}$ itself.

Finally, the UE encapsulates the generated PHR in a MAC PDU and transmits the MAC PDU to the eNB in step 1030.

The UE according to the second exemplary embodiment of the present invention is identical with that of the first exemplary embodiment except for the operations the multiplexer/demultiplexer.

In the second exemplary embodiment, the controller determines whether PHR is triggered, calculates PHs for active serving cells, $P_{CMAX,c}$, and $P_{CMAX2}$, generates PHR, and delivers the PHR to the multiplexer/demultiplexer. The multiplexer/demultiplexer according to the second exemplary embodiment multiplexes the PHR from the controller into a MAC PDU and transfers the MAC PDU to the transceiver.

As described above, the uplink transmission power configuration method and apparatus of exemplary embodiments of the present invention is capable of determining the uplink transmission power efficiently while minimizing the inter-frequency band or inter-cell interference and maintaining the required transmission powers for aggregated uplink carriers as much as possible in the mobile communication system supporting carrier aggregation.

While the invention has been shown and described with reference to certain exemplary embodiments thereof, it will be understood by those skilled in the art that various changes in form and details may be made therein without departing from the scope of the present invention as defined by the appended claims.

**Claims**

1. A method for determining uplink transmission power of a terminal, the method comprising:

    receiving (520) a maximum allowed transmission power per each of at least two serving cells;
    determining (525) a higher limit of a first maximum transmission power per each of the at least two serving cells based on a power class of the terminal and the maximum allowed transmission power per each of the at least two serving cells;
    determining (535) a lower limit of the first maximum transmission power per each of the at least two serving cells;
    determining (540) the first maximum transmission power per each of the at least two serving cells and a second maximum transmission power; and
    determining (545) uplink transmission power per each of the at least two serving cells based on the first maximum transmission power per each of the at least two serving cells and the second maximum transmission power, wherein a maximum power reduction, MPR, and a A-MPR, additive-MPR, are applied to each of the at least two serving cells commonly, when uplink transmissions of each of the at least two serving cells are operated on a same frequency band and uplink frequency bands of the at least two serving cells are adjacent to each other.

2. The method of claim 1, wherein the lower limit of the first maximum transmission power is determined based on a Power management-MPR, P-MPR, $\Delta$TC, the MPR, and the A-MPR.

3. The method of claim 1, wherein the determining the uplink transmission power comprises: reducing, when the sum of the first maximum transmission power per each of the at least two serving cells is greater than the second maximum transmission power, the first maximum transmission power per each of the at least two serving cells to make the sum of the reduced first maximum transmission power of each of the at least two serving cells equal to the second maximum transmission power; and determining the reduced first maximum transmission power per each of the at least two serving cells as the uplink transmission power per each of the at least two serving cells.

4. The method of claim 1, wherein the determining the uplink transmission power comprises: determining, when the sum of the first maximum transmission power per each of the at least two serving cells is equal to or less than the second maximum transmission power, the first maximum transmission power per each of the at least two serving cells as the uplink transmission power per each of the at least two serving cells.

5. A terminal for determining uplink transmission power, the terminal comprising:

a transceiver; and
a controller configured to:

receive (520) a maximum allowed transmission power per each of at least two serving cells,
determine (525) a higher limit of a first maximum transmission power per each of the at least two serving cells based on a power class of the terminal and the maximum allowed transmission power per each of the at least two serving cells,
determine (535) a lower limit of the first maximum transmission power per each of the at least two serving cells,
determine (540) the first maximum transmission power per each of the at least two serving cells and a second maximum transmission power, and
determine (545) uplink transmission power per each of the at least two serving cells based on the first maximum transmission power per each of the at least two serving cells and the second maximum transmission power,
wherein a maximum power reduction, MPR, and a A-MPR, additive-MPR, are applied to each of the at least two serving cells commonly, uplink transmissions of each of the at least two serving cells are operated on a same frequency band and uplink frequency bands of the at least two serving cells are adjacent to each other.

6. The terminal of claim 5, wherein the lower limit of the first maximum transmission power is determined based on a Power management-MPR, P-MPR, ΔTC, the MPR, and the A-MPR.

7. The terminal of claim 5, wherein the determining the uplink transmission power comprises:

reducing, when the sum of the first maximum transmission power per each of the at least two serving cells is greater than the second maximum transmission power, the first maximum transmission power per each of the at least two serving cells to make the sum of the reduced first maximum transmission power of each of the at least two serving cells equal to the second maximum transmission power; and
determining the reduced first maximum transmission power per each of the at least two serving cells as the uplink transmission power per each of the at least two serving cells.

8. The terminal of claim 5, wherein the determining the uplink transmission power comprises: determining, when the sum of the first maximum transmission power per each of the at least two serving cells is equal to or less than the second maximum transmission power, the first maximum transmission power per each of the at least two serving cells as the uplink transmission power per each of the at least two serving cells.

**Patentansprüche**

1. Verfahren zum Bestimmen einer Uplink-Übertragungsleistung eines Endgeräts, wobei das Verfahren Folgendes umfasst:

Empfangen (520) einer maximal erlaubten Übertragungsleistung für jede der mindestens zwei Bedienzellen;
Bestimmen (525) einer höheren Grenze einer ersten maximalen Übertragungsleistung für jede der mindestens zwei Bedienzellen basierend auf einer Leistungsklasse des Endgeräts und der maximal erlaubten Übertragungsleistung für jede der mindestens zwei Bedienzellen;
Bestimmen (535) einer unteren Grenze der ersten maximalen Übertragungsleistung für jede der mindestens zwei Bedienzellen;
Bestimmen (540) der ersten maximalen Übertragungsleistung für jede der mindestens zwei Bedienzellen und einer zweiten maximalen Übertragungsleistung; und

Bestimmen (545) der Uplink-Übertragungsleistung für jede der mindestens zwei Bedienzellen basierend auf der ersten maximalen Übertragungsleistung für jede der mindestens zwei Bedienzellen und der zweiten maximalen Übertragungsleistung,

wobei eine maximale Leistungsreduzierung, MPR, und eine A-MPR, additive MPR, gemeinsam auf jede der mindestens zwei Bedienzellen angewendet werden, wenn Uplink-Übertragungen von jeder der mindestens zwei Bedienzellen auf demselben Frequenzband betrieben werden und Uplink-Frequenzbänder der mindestens zwei Bedienzellen aneinander angrenzen.

2. Verfahren nach Anspruch 1, wobei die untere Grenze der ersten maximalen Übertragungsleistung basierend auf einer Leistungsmanagement-MPR, P-MPR, $\Delta$TC, der MPR und der A-MPR bestimmt wird.

3. Verfahren nach Anspruch 1, wobei das Bestimmen der Uplink-Übertragungsleistung Folgendes umfasst:

Reduzieren, wenn die Summe der ersten maximalen Übertragungsleistung für jede der mindestens zwei Bedienzellen größer ist als die zweite maximale Übertragungsleistung, der ersten maximalen Übertragungsleistung für jede der mindestens zwei Bedienzellen, um die Summe der reduzierten ersten maximalen Übertragungsleistung von jeder der mindestens zwei Bedienzellen gleich der zweiten maximalen Übertragungsleistung zu machen; und

Bestimmen der reduzierten ersten maximalen Übertragungsleistung für jede der mindestens zwei Bedienzellen als die Uplink-Übertragungsleistung für jede der mindestens zwei Bedienzellen.

4. Verfahren nach Anspruch 1, wobei das Bestimmen der Uplink-Übertragungsleistung Folgendes umfasst:
Bestimmen, wenn die Summe der ersten maximalen Übertragungsleistung für jede der mindestens zwei Bedienzellen gleich oder kleiner ist als die zweite maximale Übertragungsleistung, der ersten maximalen Übertragungsleistung für jede der mindestens zwei Bedienzellen als die Uplink-Übertragungsleistung für jede der mindestens zwei Bedienzellen.

5. Endgerät zum Bestimmen der Uplink-Übertragungsleistung, wobei das Endgerät Folgendes umfasst:

einen Transceiver; und
eine Steuerung, die konfiguriert ist zum:

Empfangen (520) einer maximal erlaubten Übertragungsleistung für jede der mindestens zwei Bedienzellen,
Bestimmen (525) einer höheren Grenze einer ersten maximalen Übertragungsleistung für jede der mindestens zwei Bedienzellen basierend auf einer Leistungsklasse des Endgeräts und der maximal erlaubten Übertragungsleistung für jede der mindestens zwei Bedienzellen,
Bestimmen (535) einer unteren Grenze der ersten maximalen Übertragungsleistung für jede der mindestens zwei Bedienzellen,
Bestimmen (540) der ersten maximalen Übertragungsleistung für jede der mindestens zwei Bedienzellen und einer zweiten maximalen Übertragungsleistung, und
Bestimmen (545) der Uplink-Übertragungsleistung für jede der mindestens zwei Bedienzellen basierend auf der ersten maximalen Übertragungsleistung für jede der mindestens zwei Bedienzellen und der zweiten maximalen Übertragungsleistung,
wobei eine maximale Leistungsreduzierung, MPR, und eine A-MPR, additive MPR, gemeinsam auf jede der mindestens zwei Bedienzellen angewendet werden, Uplink-Übertragungen von jeder der mindestens zwei Bedienzellen auf demselben Frequenzband betrieben werden und Uplink-Frequenzbänder der mindestens zwei Bedienzellen aneinander angrenzen.

6. Endgerät nach Anspruch 5, wobei die untere Grenze der ersten maximalen Übertragungsleistung basierend auf einer Leistungsmanagement-MPR, P-MPR, $\Delta$TC, der MPR, und der A-MPR bestimmt wird.

7. Endgerät nach Anspruch 5, wobei das Bestimmen der Uplink-Übertragungsleistung Folgendes umfasst:

Reduzieren, wenn die Summe der ersten maximalen Übertragungsleistung für jede der mindestens zwei Bedienzellen größer ist als die zweite maximale Übertragungsleistung, der ersten maximalen Übertragungsleistung für jede der mindestens zwei Bedienzellen, um die Summe der reduzierten ersten maximalen Übertragungsleistung von jeder der mindestens zwei Bedienzellen gleich der zweiten maximalen Übertragungsleistung zu machen; und
Bestimmen der reduzierten ersten maximalen Übertragungsleistung für jede der mindestens zwei Bedienzellen als die Uplink-Übertragungsleistung für jede der mindestens zwei Bedienzellen.

8. Endgerät nach Anspruch 5, wobei das Bestimmen der Uplink-Übertragungsleistung Folgendes umfasst:
Bestimmen, wenn die Summe der ersten maximalen Übertragungsleistung für jede der mindestens zwei Bedienzellen gleich oder kleiner ist als die zweite maximale Übertragungsleistung, der ersten maximalen Übertragungsleistung für jede der mindestens zwei Bedienzellen als die Uplink-Übertragungsleistung für jede der mindestens zwei Bedienzellen.

**Revendications**

1. Procédé pour déterminer la puissance de transmission de liaison montante d'un terminal, le procédé comprenant :

   recevoir (520) une puissance de transmission autorisée maximale pour chacune d'au moins deux cellules de desserte ;
   déterminer (525) une limite supérieure d'une première puissance de transmission maximale pour chacune des au moins deux cellules de desserte sur la base d'une classe de puissance du terminal et de la puissance de transmission autorisée maximale pour chacune des au moins deux cellules de desserte ;
   déterminer (535) une limite inférieure de la première puissance de transmission maximale pour chacune des au moins deux cellules de desserte ;
   déterminer (540) la première puissance de transmission maximale pour chacune des au moins deux cellules de desserte et une deuxième puissance de transmission maximale ; et
   déterminer (545) la puissance de transmission de liaison montante pour chacune des au moins deux cellules de desserte sur la base de la première puissance de transmission maximale pour chacune des au moins deux cellules de desserte et de la deuxième puissance de transmission maximale,
   où une réduction de puissance maximale, MPR, et une A-MPR, MPR supplémentaire, sont appliquées pour chacune des au moins deux cellules de desserte en commun, lorsque les transmissions de liaison montante de chacune des au moins deux cellules de desserte sont opérées sur une même bande de fréquences et les bandes de fréquences de liaison montante des au moins deux cellules de desserte sont adjacentes les unes aux autres.

2. Procédé selon la revendication 1, où la limite inférieure de la première puissance de transmission maximale est déterminée sur la base d'une gestion de puissance MPR, P-MPR, d'une ∆TC, de la MPR, et de l'A-MPR.

3. Procédé selon la revendication 1, où la détermination de la puissance de transmission de liaison montante comprend :

   réduire, lorsque la somme de la première puissance de transmission maximale pour chacune des au moins deux cellules de desserte est supérieure à la deuxième puissance de transmission maximale, la première puissance de transmission maximale pour chacune des au moins deux cellules de desserte pour rendre la somme de la première puissance de transmission maximale réduite de chacune des au moins deux cellules de desserte égale à la deuxième puissance de transmission maximale ; et
   déterminer la première puissance de transmission maximale réduite pour chacune des au moins deux cellules de desserte en tant que puissance de transmission de liaison montante pour chacune des au moins deux cellules de desserte.

4. Procédé selon la revendication 1, où la détermination de la puissance de transmission de liaison montante comprend :
   déterminer, lorsque la somme de la première puissance de transmission maximale pour chacune des au moins deux cellules de desserte est égale ou inférieure à la deuxième puissance de transmission maximale, la première puissance de transmission maximale pour chacune des au moins deux cellules de desserte en tant que puissance de transmission de liaison montante pour chacune des au moins deux cellules de desserte.

5. Terminal pour déterminer la puissance de transmission de liaison montante, le terminal comprenant :

   un émetteur-récepteur ; et
   un contrôleur configuré pour :

recevoir (520) une puissance de transmission autorisée maximale pour chacune d'au moins deux cellules de desserte,

déterminer (525) une limite supérieure d'une première puissance de transmission maximale pour chacune des au moins deux cellules de desserte sur la base d'une classe de puissance du terminal et de la puissance de transmission autorisée maximale pour chacune des au moins deux cellules de desserte,

déterminer (535) une limite inférieure de la première puissance de transmission maximale pour chacune des au moins deux cellules de desserte,

déterminer (540) la première puissance de transmission maximale pour chacune des au moins deux cellules de desserte et une deuxième puissance de transmission maximale, et

déterminer (545) la puissance de transmission de liaison montante pour chacune des au moins deux cellules de desserte sur la base de la première puissance de transmission maximale pour chacune des au moins deux cellules de desserte et de la deuxième puissance de transmission maximale,

où une réduction de puissance maximale, MPR, et une A-MPR, MPR supplémentaire, sont appliquées à chacune des au moins deux cellules de desserte en commun, les transmissions de liaison montante de chacune des au moins deux cellules de desserte sont opérées sur une même bande de fréquences et les bandes de fréquences de liaison montante des au moins deux cellules de desserte sont adjacentes les unes aux autres.

6. Terminal selon la revendication 5, où la limite inférieure de la première puissance de transmission maximale est déterminée sur la base d'une gestion de puissance MPR, P-MPR, d'une ΔTC, de la MPR et de l'A-MPR.

7. Terminal selon la revendication 5, où la détermination de la puissance de transmission de liaison montante comprend :

réduire, lorsque la somme de la première puissance de transmission maximale pour chacune des au moins deux cellules de desserte est supérieure à la deuxième puissance de transmission maximale, la première puissance de transmission maximale pour chacune des au moins deux cellules de desserte pour rendre la somme de la première puissance de transmission maximale réduite de chacune des au moins deux cellules de desserte égale à la deuxième puissance de transmission maximale ; et

déterminer la première puissance de transmission maximale réduite pour chacune des au moins deux cellules de desserte en tant que puissance de transmission de liaison montante pour chacune des au moins deux cellules de desserte.

8. Terminal selon la revendication 5, où la détermination de la puissance de transmission de liaison montante comprend :
déterminer, lorsque la somme de la première puissance de transmission maximale pour chacune des au moins deux cellules de desserte est égale ou inférieure à la deuxième puissance de transmission maximale, la première puissance de transmission maximale pour chacune des au moins deux cellules de desserte en tant que puissance de transmission de liaison montante pour chacune des au moins deux cellules de desserte.

EP 2 664 199 B1

[Fig. 1]

[Fig. 2]

[Fig. 3]

[Fig. 4]

[Fig. 5]

[Fig. 6]

UPLINK TRANSMISSION COMMAND FOR MULTIPLE UPLINK CARRIERS ~605

CALCULATE PER-UPLINK CARRIER REQUIRED TRANSMISSION POWERS ~610

DETERMINE TYPE 1 TRANSMISSION POWERS BASED ON TYPE 1 MAXIMUM TRANSMISSION POWERS AND REQUIRED TRANSMISSION POWERS ~615

SUM OF TYPE 1 TRANSMISSION POWERS ~620

SUM OF TYPE 1 TRANSMISSION POWERS > TYPE 2 MAXIMUM TRANSMISSION POWER ~625

YES — REDUCE TYPE 1 TRANSMISSION POWERS TO MAKE SUM OF TYPE 1 TRANSMISSION POWERS EQUAL TO TYPE 2 MAXIMUM TRANSMISSION POWER ~630

REDUCED TYPE 1 TRANSMISSION POWERS = TRANSMISSION POWERS ~635

NO — TYPE 1 TRANSMISSION POWERS = TRANSMISSION POWERS ~640

[Fig. 7]

[Fig. 8]

| | |
|---|---|
| BITMAP | ~ 805 |
| Power Headroom | ~ 810 |
| $P_{CMAX,c}$ | ~ 815 |
| ⋮ | |
| Power Headroom | ~ 820 |
| $P_{CMAX,c}$ | ~ 825 |

[Fig. 9]

910

| BITMAP | Power Headroom | $P_{CMAX,c}$ | Power Headroom | $P_{CMAX,c}$ | $P_{CMAX2}$ |
|---|---|---|---|---|---|

REPORT ONLY WHEN PHR IS TRIGGERED BY CHANGE OF $P_{CMAX2}$

905

| BITMAP | Power Headroom | $P_{CMAX,c}$ |
|---|---|---|

INSERT $P_{CMAX,c}$

[Fig. 10]

```
┌─────────────────────────────────────┐
│   TRIGGER PHR BY CHANGE OF P_CMAX2   │──── 1005
│      OVER PREDETERMINED VALUE        │
└─────────────────────────────────────┘
                  │
                  ▼
┌─────────────────────────────────────┐
│  CALCULATE PER-SERVING CELL PH (ACCORDING TO │
│  PREDETERMINED METHOD IN CONSIDERATION OF    │──── 1010
│      EXISTENCE OF UPLINK TRANSMISSION        │
└─────────────────────────────────────┘
                  │
                  ▼
                 1015
        ◇───────────────────◇
   NO   NUMBER OF ACTIVE UPLINK   YES
◄───────   SERVING CELL > 1?   ───────►
        ◇───────────────────◇
   │                              │
   ▼  1020                        ▼  1025
┌──────────────────────┐   ┌──────────────────────────────┐
│ GENERATE PHR INCLUDING│   │ GENERATE PHR INCLUDING PHS,   │
│ PHS AND P_CMAX2       │   │ P_CMAX,c , AND P_CMAX2        │
└──────────────────────┘   └──────────────────────────────┘
   │                              │
   │          1030                │
   │   ┌──────────────────────┐   │
   └──►│     TRANSMIT PHR      │◄──┘
       └──────────────────────┘
```

Trigger PHR by change of $P_{CMAX2}$ over predetermined value — 1005

Calculate per-serving cell PH (according to predetermined method in consideration of existence of uplink transmission) — 1010

Number of active uplink serving cell > 1? — 1015

Generate PHR including PHS and $P_{CMAX2}$ — 1020

Generate PHR including PHS, $P_{CMAX,c}$, and $P_{CMAX2}$ — 1025

Transmit PHR — 1030

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100197339 A1


**Non-patent literature cited in the description**

- **CATT.** Definition of Pcmax in CA. *3GPP DRAFT; R4-104357, 3RD GENERTAION PARTNERSHIP PROJECT (3GPP),* 09 November 2010, vol. RAN WG4